# NEUE EUROPÄISCHE PATENTSCHRIFT

(11) **EP 2 753 826 B2**
(45) Veröffentlichungstag und Bekanntmachung des Hinweises auf die Entscheidung über den Einspruch: **10.04.2024**
(45) Hinweis auf die Patenterteilung: 01.07.2015
(21) Anmeldenummer: 12758751.7
(22) Anmeldetag: 16.08.2012
(51) Int. Cl.: F03D 80/40

(54) **VERFAHREN UND SYSTEM ZUR ENTEISUNG EINER WINDENERGIEANLAGE**
METHOD AND SYSTEM FOR DEICING A WIND TURBINE
PROCÉDÉ ET SYSTÈME DE DÉGIVRAGE D'UNE ÉOLIENNE

(30) Priorität: 07.09.2011 DE 102011082249
(43) Veröffentlichungstag der Anmeldung: 16.07.2014
(73) Patentinhaber: Siemens Gamesa Renewable Energy Service GmbH, 20097 Hamburg (DE)
(72) Erfinder: BRANDT, Karsten, 24214 Altwittenbek (DE)
(74) Vertreter: Wallinger Ricker Schlotter Tostmann
(86) Internationale Anmeldenummer: PCT/EP2012/003486
(87) Internationale Veröffentlichungsnummer: WO 2013/034244

(56) Entgegenhaltungen:
- WO-A1-2010/142600
- WO-A2-2011/009459
- US-A1- 2009 153 656
- US-A1- 2010 119 370
- "Richtlinie 2006/42/ EG des Europäischen Parlaments und des Rates über maschinen und zur Änderung der Richtlinie 95/16/EG (Neufassung)", Amtsblatt der Europäischen Union, 17 May 2006 (2006-05-17), pages 1-63,
- "Erweiterung Windpark Kittsee", Austrian Wind Power GmbH, 17 February 2010 (2010-02-17), pages 1-69,
- "Erweiterung Windpark Deutschkreutz", Austrian Wind Power GmbH, 3 September 2010 (2010-09-03), pages 1-10,
- "Betriebsanleitung Windenergieanlage ENERCON E70 E4", Enercon, 12 May 2011 (2011-05-12), pages 1-196,

## Beschreibung

Die Erfindung betrifft ein Verfahren zum Enteisen einer Windenergieanlage mit einer Enteisungssteuervorrichtung, mittels der ein Enteisungsvorgang ausführbar ist, bei dem an der Windenergieanlage anhaftendes Eis wenigstens teilweise gelöst wird und in einen Gefahrenbereich unterhalb der Windenergieanlage fällt. Die Erfindung betrifft ferner ein Enteisungssystem für eine Windenergieanlage, umfassend eine Windenergieanlage mit einer Enteisungssteuervorrichtung, mittels der ein Enteisungsvorgang ausführbar ist, bei dem an der Windenergieanlage anhaftendes Eis wenigstens teilweise gelöst wird und in einen Gefahrenbereich unterhalb der Windenergieanlage fällt, wobei das Enteisungssystem eine Bedienvorrichtung zur Einleitung und/oder Unterbrechung des Enteisungsvorgangs umfasst.

An Standorten mit extremen Witterungsbedingungen und auch an vielen anderen Standorten im Winter stellt die Vereisung einer Windenergieanlage, insbesondere der Rotorblätter einer Windenergieanlage, ein Hindernis für den effizienten und sicheren Betrieb der Windenergieanlage dar. Moderne Windenergieanlagen sind daher in der Regel für eine Enteisung ausgelegt oder mit speziellen Enteisungsvorrichtungen ausgestattet.

Bekannt ist beispielsweise ein Betriebsverfahren, bei dem die Windenergieanlage mittels Stellantrieben für die Turmkanzel, den Rotor oder den Blattwinkel der Rotorblätter in kontrollierte Schwingungen versetzt wird, so dass anhaftendes Eis abplatzt und zu Boden fällt.

Ferner ist es bekannt, die Oberfläche der Windenergieanlage, insbesondere der Rotorblätter, zu erwärmen, so dass anhaftendes Eis angeschmolzen wird und von der Windenergieanlage abrutscht.

Aus WO 2010/142600 A1 ist ein Verfahren zum Enteisen einer Windenergieanlage mit einer Enteisungssteuervorrichtung bekannt, mittels der ein mit einer Bedienvorrichtung gestarteter Enteisungsvorgang ausführbar ist, bei dem an der Windenergieanlage anhaftendes Eis wenigstens teilweise gelöst wird und in einen Gefahrenbereich unterhalb der Windenergieanlage fällt, wenn ein Kriterium, das Eisbildung auf den Rotorblättern anzeigt, erfüllt ist.

Gemeinsam ist den bekannten Enteisungsverfahren, dass das Eis unkontrolliert zu Boden fällt und eine entsprechende Gefahrenquelle, beispielsweise für Menschen, Tiere und Objekte in der Nähe der Windenergieanlage, darstellt.

Der Erfindung liegt die Aufgabe zugrunde, die Sicherheit bei der Enteisung einer Windenergieanlage zu erhöhen und insbesondere eine Gefährdung von Menschen, Tieren und Objekten in der Nähe der Windenergieanlage durch herabfallendes Eis zu verringern.

Diese Aufgabe wird gelöst durch ein Verfahren mit den Merkmalen des Anspruchs 1.

Erfindungsgemäß ist vorgesehen, dass der Gefahrenbereich vor und während des Enteisungsvorganges überwacht wird. Sobald eine Vetosituation vorliegt oder beobachtet wird, beispielsweise weil sich ein Mensch, ein Tier und/oder ein vor herabfallendem Eis zu schützendes Objekt im Gefahrenbereich befindet, wird der Enteisungsvorgang, insbesondere durch eine Bedienperson, mittels der Bedienvorrichtung unterbrochen oder gar nicht erst eingeleitet. Die Sicherheit bei der Enteisung wird erfindungsgemäß somit insbesondere dadurch erhöht, dass der Enteisungsvorgang nur ausgeführt oder fortgeführt wird, wenn keine Gefährdung durch herabfallendes Eis besteht oder beobachtet wird.

Ebenfalls ist der Fall erfasst, dass eine Vetosituation bevorsteht, wenn beispielsweise ein Mensch, ein Tier oder ein zu schützendes Objekt noch außerhalb des Gefahrenbereichs ist, sich jedoch auf den Weg in den Gefahrenbereich hinein befindet. Dazu wird vorzugsweise auch die Umgebung des Gefahrenbereichs überwacht bzw. umfasst der überwachte Gefahrenbereich diese Umgebung desjenigen Bereichs, in dem Eisschlag zu erwarten ist.

Eine entsprechende Enteisungssteuervorrichtung kann im Rahmen der Erfindung Teil einer ohnehin vorhandenen Betriebsführungsvorrichtung der Windenergieanlage sein oder separat zur Betriebsführungsvorrichtung ausgebildet sein. Insbesondere kann eine Windenergieanlage mit einer entsprechenden Enteisungssteuervorrichtung nachgerüstet werden.

Zum Schutz der Bedienperson selbst ist dabei erfindungsgemäß eine Bedienvorrichtung zum Einleiten und/oder Unterbrechen des Enteisungsvorgangs vorgesehen, die es der Bedienperson erlaubt, sich während des Enteisungsvorgangs, also während Eis in den Gefahrenbereich fallen kann, außerhalb des von herabfallendem Eis gefährdeten Bereichs bzw. des Gefahrenbereichs aufzuhalten.

Somit wird durch die Erfindung bei der Enteisung eine Gefährdung von Menschen, Tieren und/oder zu schützenden Objekten durch herabfallendes Eis minimiert sowie entsprechend die Sicherheit bei der Enteisung sowohl für eine Bedienperson als auch für Dritte verbessert.

Gemäß einer Variante des erfindungsgemäßen Verfahrens ist vorgesehen, dass das Überwachen des Gefahrenbereichs und/oder das Starten des Enteisungsvorgangs durch wenigstens eine Bedienperson in Sichtweite des Gefahrenbereichs erfolgt. Dies stellt eine besonders einfach zu realisierende Verfahrensführung dar, wobei die Bedienperson oder Bedienpersonen gegen herabfallendes Eis geschützt ist oder sind.

Alternativ hierzu erfolgt das Starten des Enteisungsvorgangs von außerhalb der Sichtweite des Gefahrenbereichs, insbesondere von einer Fernüberwachungszentrale aus.

Die Sicherheit von Menschen und/oder Tieren wird weiter verbessert, wenn vorzugsweise vor dem Starten des Enteisungsvorgangs ein, insbesondere optisches oder akustisches, Warnsignal erzeugt wird, das im Gefahrenbereich für Menschen wahrnehmbar ist und/oder auf Tiere abschreckend wirkt. Beispielsweise kann ein Ton oder Geräusch in einer Lautstärke erzeugt werden, der Menschen und Tiere aus dem Gefahrenbereich vertreibt. Für Menschen kann dies auch durch eine Lautsprecherdurchsage mit einer Ankündigung des Enteisungsvorgangs und einer Warnung vor Eisschlag verbunden sein, mit der Aufforderung, den Gefahrenbereich zu verlassen.

Vorteilhafterweise wird der Enteisungsvorgang, insbesondere automatisch, unterbrochen, wenn eine drahtlose oder kabelgebundene Verbindung, insbesondere Signalverbindung oder Verbindung zur Kommunikation, zwischen der Bedienvorrichtung und der Enteisungssteuervorrichtung gestört oder unterbrochen ist oder wird.

Dadurch wird sichergestellt, dass der Enteisungsvorgang ausschließlich dann eingeleitet, ausgeführt oder fortgeführt wird, wenn eine Unterbrechung des Enteisungsvorgangs mittels der Bedienvorrichtung möglich ist. Somit wird eine erhöhte Sicherheit im Gefahrenbereich auch dann gewährleistet, wenn technische Probleme mit einer Verbindung, mit einer Signalübertragung oder mit einer Kommunikation zwischen der Bedienvorrichtung und der Enteisungssteuervorrichtung vorliegen oder auftreten.

Wenn die Überwachung des Gefahrenbereichs mittels einer Überwachungsvorrichtung ausgeführt wird, wird darüber hinaus ermöglicht, dass die Überwachung des Gefahrenbereichs aus der Ferne, das heißt ohne direkte Sicht einer Bedienperson auf den Gefahrenbereich, erfolgt. Dadurch ist es insbesondere ermöglicht, dass die Enteisung einer Windenergieanlage von einem entfernten Kontrollraum eingeleitet und überwacht wird, wie er beispielsweise für die zentrale Fernüberwachung vieler Windenergieanlagen bekannt ist.

Wenn der Enteisungsvorgang automatisch unterbrochen wird, sobald die Überwachungsvorrichtung oder eine Signalübertragung von oder zu der Überwachungsvorrichtung gestört ist oder wird, wird wiederum die Sicherheit im Gefahrenbereich auch bei technischen Problemen gewährleistet.

Gemäß einer erfindungsgemäßen Variante werden während des Enteisungsvorgangs Signale der Überwachungsvorrichtung, insbesondere Signale einer optischen Kamera, einer Infrarotkamera, einer Lichtschranke und/oder eines Bewegungssensors der Überwachungsvorrichtung, automatisch ausgewertet und der Enteisungsvorgang automatisch unterbrochen, wenn diese Auswertung ergibt, dass eine Vetosituation eingetreten ist oder bevorsteht, bzw. ist das System ausgebildet, während des Enteisungsvorgangs Signale der Überwachungsvorrichtung, insbesondere Signale einer optischen Kamera, einer Infrarotkamera, einer Lichtschranke und/oder eines Bewegungssensors der Überwachungsvorrichtung, automatisch auszuwerten und den Enteisungsvorgang automatisch zu unterbrechen, wenn diese Auswertung ergibt, dass eine Vetosituation eingetreten ist oder bevorsteht. Es ist auch möglich, mehrere dieser Signale gleichzeitig zu verwenden.

Hierdurch wird alternativ oder zusätzlich auch die Überwachung des Gefahrenbereichs während des Enteisungsvorgangs, die beispielsweise durch eine Bedienperson erfolgt, durch eine automatische Überwachung und gegebenenfalls automatische Unterbrechung des Enteisungsvorgangs ergänzt und die Sicherheit somit zusätzlich erhöht.

Bevorzugterweise wird der Enteisungsvorgang auch dann automatisch unterbrochen, wenn ein Parameter der Windverhältnisse, insbesondere eine Windgeschwindigkeit oder eine Windrichtung, oder ein Betriebsparameter der Windenergieanlage, insbesondere eine Umlaufgeschwindigkeit eines Rotorblattes der Windenergieanlage, außerhalb eines jeweils vorgegebenen Toleranzbereichs liegt. Hierdurch wird ermöglicht, dass abgelöstes Eis ausschließlich in den überwachten Gefahrenbereich fällt und der Enteisungsvorgang nicht ausgeführt oder fortgeführt wird oder eingeleitet werden kann, wenn zu befürchten ist, dass auch außerhalb des überwachten Gefahrenbereiches Menschen oder Tiere und/oder vor herabfallendem Eis zu schützende Objekte durch herabfallendes Eis gefährdet sind oder sein können.

Die Sicherheit des erfindungsgemäßen Verfahrens wird weiter erhöht, wenn nach einem Enteisungsvorgang ein Quittierschalter an einer Betriebsführungsvorrichtung der Windenergieanlage quittiert wird und nach dem Quittieren die Betriebsführungsvorrichtung zu einem automatischen Betrieb der Windenergieanlage überleitet.

Besonders vorteilhaft im Rahmen der Erfindung ist es, wenn wenigstens zwei Windenergieanlagen eines Windparks gleichzeitig oder nacheinander, insbesondere unter Verwendung derselben Bedienvorrichtung und/oder derselben Überwachungsvorrichtung, enteist werden. Hierdurch wird insbesondere die Enteisung mehrerer Windenergieanlagen an demselben Standort besonders effizient gestaltet.

Die Aufgabe wird auch gelöst durch ein Enteisungssystem mit den Merkmalen des Anspruchs 8 für eine Windenergieanlage.

Das erfindungsgemäße Enteisungssystem ermöglicht insbesondere das Enteisen der Windenergieanlage gemäß dem zuvor beschriebenen erfindungsgemäßen Verfahren. Eine entsprechende Enteisungssteuervorrichtung ist entweder in eine ohnehin vorhandene Betriebsführungsvorrichtung integriert oder integrierbar, oder kommt separat zur Anwendung, beispielsweise durch eine Nachrüstung einer Windenergieanlage.

Dabei ist die Bedienvorrichtung von einem Standort mit direkter Sicht auf den Gefahrenbereich aus bedienbar, so dass beispielsweise eine Betriebsperson den Gefahrenbereich überblicken und somit überwachen und gleichzeitig die Bedienvorrichtung bedienen kann, oder es ist eine Überwachungsvorrichtung für den Gefahrenbereich vorgesehen, so dass keine direkte Sicht auf den Gefahrenbereich bestehen muss. Beide Alternativen sind im Rahmen der Erfindung miteinander kombinierbar.

Gemäß einer erfindungsgemäßen Variante ist die Bedienvorrichtung, insbesondere für die erste Alternative zur Überwachung des Gefahrenbereichs, tragbar ausgebildet und über Signalkabel und/oder drahtlos mit der Enteisungssteuervorrichtung verbindbar oder verbunden. Hierdurch wird ermöglicht, dass eine Bedienperson mit der Bedienvorrichtung in der Nähe der Windenergieanlage, jedoch außerhalb des Gefahrenbereichs, beweglich ist und den Enteisungsvorgang mittels der Bedienvorrichtung von einem flexibel wählbaren Standort außerhalb des Gefahrenbereichs einleiten und/oder unterbrechen kann. Insbesondere eröffnet eine tragbare Bedienvorrichtung der Bedienperson die Möglichkeit eines schnellen Standort- oder Positionswechsels etwa für den Fall, dass wider Erwarten Eisschlag am Standort der Bedienperson zu befürchten ist, so dass die Sicherheit für die Bedienperson weiter erhöht wird, oder, dass ein günstigerer Standort mit besserem Überblick über den Gefahrenbereich aufgesucht wird.

Eine drahtlose Verbindung zwischen Bedienvorrichtung und Enteisungssteuervorrichtung erfolgt bevorzugt mittels sicherer Funkverbindung. Hierunter wird im Rahmen der Erfindung insbesondere eine Funkverbindung verstanden, bei der geeignete technische Maßnahmen vorgesehen sind, um eine fehlerfreie und ungestörte Kommunikation über die Funkverbindung sicherzustellen. Beispielsweise sind Maßnahmen zur Validierung übermittelter Signale, Maßnahmen zur Sicherung der Kommunikation gegen Eingriff von außen, insbesondere durch Verschlüsselung der übermittelten Signale und/oder Maßnahmen zur Überprüfung der Funkverbindung, insbesondere mittels Austausch von Kontrollsignalen, vorgesehen.

Die Überwachungsvorrichtung umfasst vorzugsweise eine optische Kamera, eine Infrarotkamera, eine Lichtschranke und/oder einen Bewegungssensor. Der Vorteil der optischen Kamera besteht insbesondere darin, dass einer Bedienperson ohne großen technischen Aufwand Bilder des Gefahrenbereichs in Echtzeit zur Verfügung gestellt werden können. Eine Infrarotkamera erlaubt insbesondere auch bei Dunkelheit oder Schneetreiben, warme Objekte wie Menschen, Tiere oder Fahrzeuge mit laufenden Motoren von kalten Objekten, beispielsweise Eis, zu unterscheiden. Mittels Lichtschranken, Türkontakten und dergleichen ist insbesondere eine Überwachung der Grenzen des Gefahrenbereichs, der bevorzugterweise zudem eingezäunt ist, ermöglicht. Mittels eines Bewegungssensors ist es insbesondere ermöglicht, Menschen, Tiere oder bewegte Fahrzeuge im Gefahrenbereich zu erkennen.

Besonders bevorzugt ist es, wenn das Enteisungssystem eine Warnvorrichtung zur Erzeugung eines, insbesondere akustischen oder optischen, Warnsignals umfasst, das im Gefahrenbereich für Menschen wahrnehmbar ist und/oder auf Tiere abschreckend wirkt. Dadurch wird insbesondere ermöglicht, dass unbeteiligte Dritte während des Enteisungsvorgangs gewarnt werden, den Gefahrenbereich nicht zu betreten und dass Tiere, insbesondere Wildtiere, aus dem Gefahrenbereich verjagt werden.

Eine besonders bevorzugte Weiterbildung des Enteisungssystems sieht vor, dass die Enteisungssteuervorrichtung oder die Bedieneinrichtung wenigstens einen Signaleingang zum Empfang eines, insbesondere automatisch generierten, Signals aufweist, wobei die Enteisungssteuervorrichtung oder die Bedieneinrichtung dazu ausgebildet ist, den Enteisungsvorgang ausgelöst durch ein am Signaleingang empfangenes Signal automatisch zu unterbrechen.

Ebenfalls ist es hierbei vorteilhaft, wenn eine mit dem Signaleingang verbundene Auswertevorrichtung zur Auswertung eines Signals der Überwachungsvorrichtung, insbesondere eines Signals einer optischen Kamera, einer Infrarotkamera, einer Lichtschranke und/oder eines Bewegungssensors, vorgesehen ist, wobei mittels der Auswerteeinrichtung ein automatisches Signal generierbar und an den Signaleingang der Enteisungssteuervorrichtung oder der Bedienvorrichtung weiterleitbar ist.

Hierdurch wird eine vollautomatische Überwachung des Gefahrenbereichs und eine entsprechende automatische Unterbrechung des Enteisungsvorgangs bei Vorliegen einer Vetosituation ermöglicht, die insbesondere ergänzend zu einer manuellen Unterbrechungsmöglichkeit des Enteisungsvorgangs durch eine Bedienperson mittels der Bedienvorrichtung vorgesehen sein kann. Vorteilhafterweise ist vorgesehen, dass ein automatisch generiertes Veto manuell überbrückbar ist oder überbrückt wird, wenn eine visuelle Inspektion des Gefahrenbereichs ergibt, dass eine konkrete Gefährdung nicht vorliegt. So kann die Enteisung stattfinden und die Windenergieanlage wieder in Betrieb genommen werden, falls Überwachungsgeräte fehlerhaft eine Vetosituation gemeldet haben, ohne dass eine Vetosituation tatsächlich vorliegt.

Vorteilhafterweise weist eine Betriebsführungsvorrichtung der Windenergieanlage einen Quittierschalter auf, wobei die Betriebsführungsvorrichtung ausgebildet ist, nach einem Enteisungsvorgang erst nach Quittierung am Quittierschalter wieder in einen automatischen Betrieb der Windenergieanlage überzugehen. Diese Maßnahme dient der Sicherheit der Betriebsführung der Windenergieanlage und ist besonders sinnvoll bei Durchführung des erfindungsgemäßen Verfahrens durch eine Bedienperson vor Ort, also am Ort der Windenergieanlage.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch ein beispielhaftes erfindungsgemäßes Enteisungssystem;
- Fig. 2: schematisch ein weiteres beispielhaftes erfindungsgemäßes Enteisungssystem;
- Fig. 3a: schematisch ein Blockdiagramm eines erfindungsgemäßen Enteisungssystems,
- Fig. 3b: schematisch ein Blockdiagramm einer Abwandlung des Enteisungssystems aus Fig. 3a und
- Fig. 3c: schematisch ein Blockdiagramm einer erfindungsgemäßen Ausführungsform des Enteisungssystems.

In den Zeichnungen sind jeweils gleiche oder gleichartige Elemente und/oder Teile mit denselben Bezugsziffern versehen, so dass von einer erneuten Vorstellung jeweils abgesehen wird.

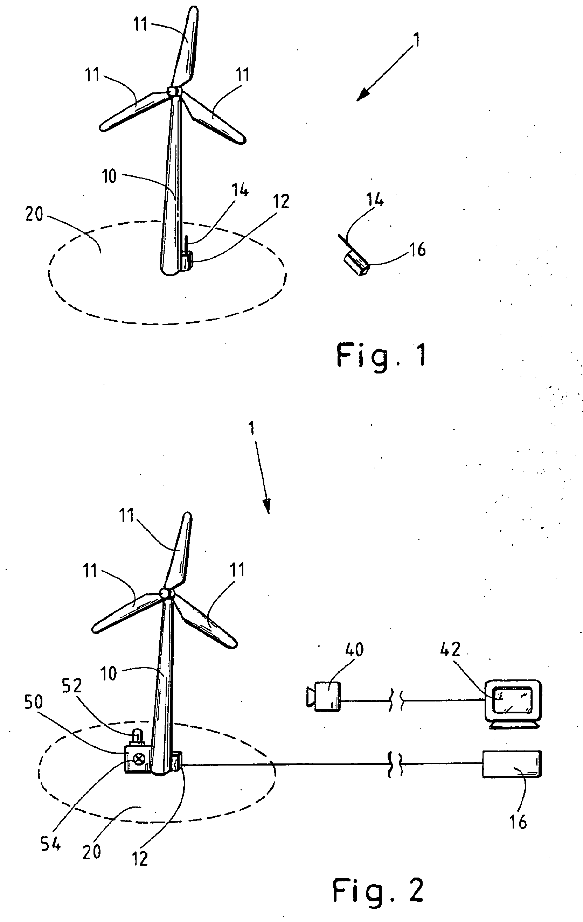

In Fig. 1 ist schematisch ein erfindungsgemäßes Enteisungssystem 1 dargestellt. Das Enteisungssystem 1 umfasst eine Windenergieanlage 10 mit drei Rotorblättern 11 sowie einer Enteisungssteuervorrichtung 12. Mittels der Enteisungssteuervorrichtung 12 ist ein Enteisungsvorgang für die Windenergieanlage 10, insbesondere für die Rotorblätter 11 der Windenergieanlage 10, ausführbar, bei dem an der Windenergieanlage 10 bzw. den Rotorblättern 11 anhaftendes Eis wenigstens teilweise gelöst wird. Hierfür sind bekannte Enteisungsverfahren geeignet anwendbar und/oder bekannte Enteisungsvorrichtungen geeignet verwendbar.

Das gelöste Eis fällt zu Boden in einen gestrichelt dargestellten Gefahrenbereich 20 unterhalb der Windenergieanlage 10. Der Gefahrenbereich 20 ist dabei großzügig bemessen. Insbesondere ist zu berücksichtigen, dass herabfallendes Eis eventuell durch Wind verweht oder durch eine Drehbewegung der Rotorblätter 11 seitlich von den Rotorblättern weggeschleudert werden kann und dadurch erst in einiger Entfernung von der Windenergieanlage 10 auf den Boden auftrifft. Außerdem kann ein Umfeld mit einbezogen werden, aus dem Menschen, Tiere oder Fahrzeuge in kurzer Zeit in den unmittelbar gefährlichen Bereich gelangen können.

Das Enteisungssystem 1 umfasst eine Bedienvorrichtung 16, mittels der der Enteisungsvorgang einleitbar und unterbrechbar ist. Die Bedienvorrichtung 16 ist als tragbare Funkbedienvorrichtung ausgebildet, wobei die Enteisungssteuervorrichtung 12 und die Bedienvorrichtung 16 jeweils eine Antenne 14 für eine sichere Funkverbindung zwischen der Enteisungssteuervorrichtung 12 und der tragbaren Bedienvorrichtung 16 aufweisen.

Die tragbare Bedienvorrichtung 16 ermöglicht es einer nicht dargestellten Bedienperson, den Gefahrenbereich 20 mit der Bedienvorrichtung 16 zu verlassen und einen Standort aufzusuchen, von dem aus der Gefahrenbereich direkt überwachbar, insbesondere überblickbar oder einsehbar, ist. Von diesem Standort aus wird dann mittels der tragbaren Bedienvorrichtung 16 der Enteisungsvorgang eingeleitet.

Sollte während des Enteisungsvorgangs eine gefährliche Situation oder eine Vetosituation beobachtet werden, beispielsweise weil ein Mensch oder ein Tier im oder am Gefahrenbereich 20 gesichtet wird oder weil festgestellt wird, dass sich ein zu schützendes Objekt im Gefahrenbereich 20 befindet, so kann der Enteisungsvorgang und damit auch der Eisabwurf umgehend von der Bedienperson über die Bedienvorrichtung 16 unterbrochen werden.

Außerdem kann die Bedienperson mit der Bedienvorrichtung 16 jederzeit den Standort wechseln, beispielsweise wenn sich herausstellt, dass der momentane Standort nicht sicher vor herabfallendem Eis ist. Somit wird auch die Sicherheit der Bedienperson selbst stets gewährleistet und gleichzeitig die jederzeitige Unterbrechbarkeit des Enteisungsvorgangs sichergestellt. Die Überwachung durch die Bedienperson oder eine Kamera kann alternativ auch aus der Luft erfolgen, beispielsweise auch durch unbemannte Drohnen.

Die Funkverbindung zwischen der Bedienvorrichtung 16 und der Enteisungssteuervorrichtung 12 wird außerdem ständig überwacht, beispielsweise indem die Bedienvorrichtung 16 und die Enteisungssteuervorrichtung 12 in regelmäßigen Abständen Kontrollsignale austauschen. Sobald dabei eine Störung der Funkverbindung auftritt oder festgestellt wird, d.h. wenn eine Situation auftritt, bei der der Enteisungsvorgang nicht mittels der Bedienvorrichtung 16 unterbrochen werden kann, weil ein entsprechendes Signal nicht an die Enteisungssteuervorrichtung übermittelt werden kann, wird der Enteisungsvorgang automatisch von der Enteisungssteuervorrichtung 12 unterbrochen.

In der Regel weist jede Windenergieanlage 10 ein eigenes Betriebsführungssystem auf. Die Enteisungssteuervorrichtung 12 kann ein Bestandteil dieses Betriebsführungssystems sein. Sie kann aber auch unabhängig von diesem sein.

Das in Fig. 1 dargestellte Enteisungssystem 1 kann auch mehrere Windenergieanlagen 10 mit jeweils einer Enteisungssteuervorrichtung 12 umfassen. Dabei ist es besonders vorteilhaft, wenn eine Bedienvorrichtung 16 verwendet wird, die mit allen Enteisungssteuervorrichtungen 12 verbindbar ist. Somit ist das erfindungsgemäße Enteisungssystem auch geeignet zur Enteisung eines gesamten Windparks mit vielen Windenergieanlagen 10, wobei die einzelnen Windenergieanlagen 10 zusammen, in kleineren Gruppen von wenigen Windenergieanlagen oder einzeln enteist werden können.

Eine alternative Ausführungsform der Erfindung ist schematisch in Fig. 2 gezeigt. Auch hier ist eine Windenergieanlage 10 mit einer Enteisungssteuervorrichtung 12 vorgesehen, mittels der ein Enteisungsvorgang ausführbar ist. Der Enteisungsvorgang ist mittels einer Bedienvorrichtung 16 einleitbar und unterbrechbar, wobei von der Bedienvorrichtung 16 keine direkte Sicht auf den Gefahrenbereich 20 besteht. Beispielsweise ist die Bedienvorrichtung 16 als Fernüberwachungsvorrichtung für die Windenergieanlage 10 ausgebildet und in einem Kontrollraum fern der Windenergieanlage 10 installiert.

Für die Überwachung des Gefahrenbereichs 20 ist eine Kamera 40 vorgesehen, die mit einem im entfernten Kontrollraum angeordneten Monitor 42 verbunden ist. Dadurch ist eine Überwachung des Gefahrenbereichs 20 mittels der Kamera 40 vom Kontrollraum aus ermöglicht. Die Kamera 40 ist beispielsweise eine Web-Cam.

Vorteilhafterweise wird die Kamera 40 sowie die Verbindung zwischen der Kamera 40 und dem Monitor 42 automatisch überwacht, wobei der Enteisungsvorgang automatisch unterbrochen wird, wenn eine Überwachung des Gefahrenbereichs 20 vom Kontrollraum aus technischen Gründen gestört ist. Diese Überwachungsfunktion wird beispielsweise mittels der Bedienvorrichtung 16 oder der Enteisungssteuervorrichtung 12 vorgesehen.

Bei dem in Fig. 2 dargestellten Enteisungssystem 1 befindet sich keine Bedienperson vor Ort, so dass eine direkte Kontrolle des Gefahrenbereichs 20 nicht möglich ist. Insbesondere kann die Bedienperson nicht persönlich eingreifen und beispielsweise Menschen zum Verlassen des Gefahrenbereichs 20 auffordern oder Tiere aus dem Gefahrenbereich verscheuchen.

Daher umfasst das Enteisungssystem 1 vorteilhafterweise eine Warnvorrichtung 50 mit einer Signallampe 52 sowie einem Lautsprecher 54. Dies ermöglicht, beispielsweise mittels optischer und akustischer Warnsignale, Menschen im Gefahrenbereich 20 vor dem Enteisungsvorgang zu warnen und Tiere, insbesondere Wildtiere, aus dem Gefahrenbereich 20 zu verscheuchen. Außerdem ist es denkbar, dass Menschen, die über die Kamera 40 und den Monitor 42 im Gefahrenbereich 20 beobachtet werden, über Lautsprecherdurchsagen zum Verlassen des Gefahrenbereichs 20 aufzufordern.

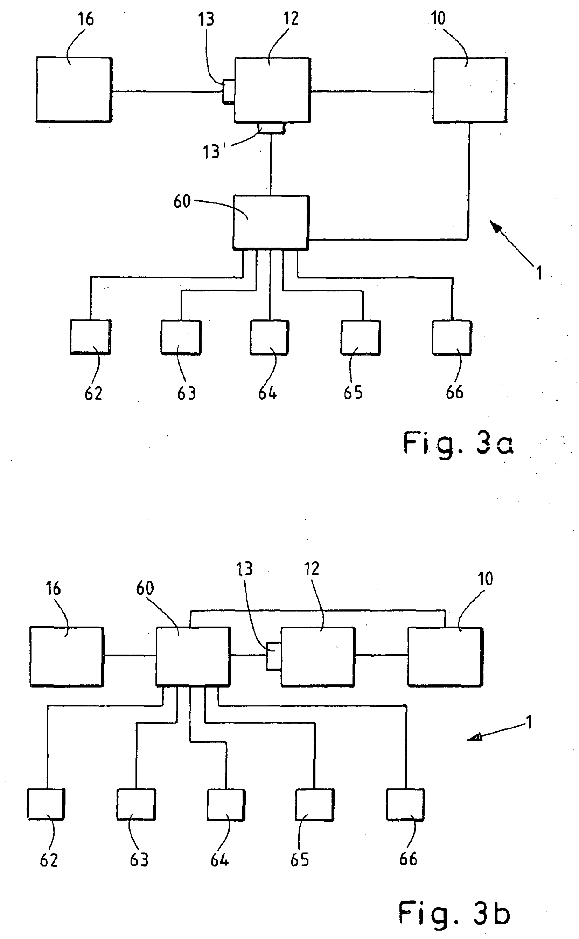

In Fig. 3a ist schematisch ein Blockdiagramm eines weiteren erfindungsgemäßen Enteisungssystems 1 dargestellt. Eine Windenergieanlage 10 umfasst eine Enteisungssteuervorrichtung 12, die einen Signaleingang 13 aufweist. Mit diesem Signaleingang 13 ist eine Bedienvorrichtung 16 verbunden, mittels der ein durch die Enteisungssteuervorrichtung 12 ausführbarer Enteisungsvorgang für die Windenergieanlage 10 einleitbar und/oder unterbrechbar ist, beispielsweise indem ein entsprechendes Signal von der Bedienvorrichtung 16 an die Enteisungssteuervorrichtung 12 übermittelt wird.

Der Bereich um die Windenergieanlage 10 wird mittels verschiedener technischer Vorrichtungen auch automatisch überwacht. Eine optische Kamera 62 stellt beispielsweise Bilder des Gefahrenbereichs 20 in Echtzeit bereit. Eine Infrarotkamera 63 erlaubt es, warme Objekte wie Menschen oder Tiere zu identifizieren. Außerdem ist wenigstens eine Lichtschranke 64, beispielsweise an einem Zugang zum Gefahrenbereich 20, vorgesehen. Ein Bewegungssensor 65 ist beispielsweise dazu ausgebildet, zwischen Bewegungen am Boden, beispielsweise von Menschen oder Wildtieren, und von herabfallendem Eis zu unterscheiden.

Ferner ist es denkbar, dass der Bereich um die Windenergieanlage 10 eingezäunt ist, wobei beispielsweise ein Unterbrecherkontakt in einer Tür des Zaunes ebenfalls mit der Auswertevorrichtung verbunden ist. Die verschiedenen Überwachungsvorrichtungen können im Rahmen der Erfindung einzeln oder in beliebiger Kombination vorgesehen werden.

Die optische Kamera 62, die Infrarotkamera 63, die Lichtschranke 64 sowie der Bewegungssensor 65 sind mit einer Auswertevorrichtung 60 verbunden, die die jeweiligen Signale empfängt und auswertet, ob eine Vetosituation vorliegt, weil sich beispielsweise ein Mensch, ein Tier und/oder ein vor herabfallendem Eis zu schützendes Objekt im Gefahrenbereich befindet.

Um sicherzustellen, dass herabfallendes Eis nicht durch starken Wind aus dem überwachten Bereich herausgetragen wird, bevor es zu Boden fällt, ist ferner ein Windmesser 66 vorgesehen, der ebenfalls mit der Auswertevorrichtung 60 verbunden ist, und dessen Signale ebenfalls ausgewertet werden. Solche Windmesser 66 sind üblicherweise in Betriebsführungssystemen von Windenergieanlagen bereits vorhanden.

Außerdem ist die Windenergieanlage 10 selbst mit der Auswertevorrichtung 60 verbunden, um der Auswertevorrichtung 60 Betriebsparameter der Windenergieanlage 10, beispielsweise der Umlaufgeschwindigkeit der Rotorblätter 11 der Windenergieanlage 10, zur Verfügung zu stellen. Somit ist ermöglicht, dass mittels der Auswertevorrichtung 60 auch die Situation erfasst wird, dass beispielsweise aufgrund hoher Drehgeschwindigkeit der Rotorblätter 11 Eisschlag außerhalb des überwachten Bereichs nicht auszuschließen ist.

Sobald mittels der Auswertevorrichtung 60 ermittelt wird, dass eine Vetosituation im überwachten Bereich um die Windenergieanlage 10 vorliegt, bevorsteht oder vorliegen kann oder dass der Gefahrenbereich 20, in dem mit Eisschlag zu rechnen ist, sich über den überwachten Bereich hinaus erstreckt, generiert die Auswertevorrichtung 60 ein Vetosignal, das an die Enteisungssteuervorrichtung 12 übermittelt wird. Dieser letzte Fall kann allerdings gegebenenfalls manuell überbrückt werden, wen eine visuelle Inspektion des erweiterten Bereiches ergibt, dass keine konkrete Gefährdungssituation vorliegt.

Die Enteisungssteuervorrichtung 12 weist einen zweiten Signaleingang 13' auf. Die Enteisungssteuervorrichtung 12 ist dazu ausgebildet, den Enteisungsvorgang der Windenergieanlage 10 zu unterbrechen, wenn an dem Signaleingang 13' ein Vetosignal anliegt oder über den Signaleingang 13' ein Vetosignal empfangen wird. Auch wird in diesem Fall der Enteisungsvorgang nicht gestartet, wenn von der Bedienvorrichtung 16 ein Signal zum Einleiten des Enteisungsvorgangs am Signaleingang 13 anliegt oder empfangen wird.

Eine alternative Verschaltung der Bedienvorrichtung 16, der Auswertevorrichtung 60 und der Enteisungssteuervorrichtung 12 ist schematisch in Fig. 3b dargestellt. Dabei erfolgt die Kommunikation zwischen der Bedienvorrichtung 16 und der Enteisungssteuervorrichtung 12 indirekt über die Auswertevorrichtung 60.

Ein Signal zum Einleiten des Enteisungsvorgangs von der Bedienvorrichtung 16 wird dabei ausschließlich dann von der Auswertevorrichtung 60 an die Enteisungssteuervorrichtung 12 weitergeleitet, wenn eine Auswertung mittels der Auswertevorrichtung keine Vetosituation oder sonstige Gefahrensituation ergibt. Ebenso wird mittels der Auswertevorrichtung 60 automatisch ein Signal zur Unterbrechung des Enteisungsvorgangs generiert und an die Enteisungssteuervorrichtung 12 übermittelt, sobald die Auswertung eine Vetosituation oder sonstige Gefahrensituation ergibt.

Auch so wird sichergestellt, dass der Enteisungsvorgang nur dann ausgeführt oder fortgeführt wird, wenn ein entsprechender Befehl bzw. ein entsprechendes Signal von der Bedienvorrichtung 16 vorliegt und keine Vetosituation ermittelt wurde. Gegebenenfalls kann der Enteisungsvorgang allerdings noch durch manuelle Betätigung einer Bedienvorrichtung vor Ort eingeleitet und unterbrochen werden, wenn eine visuelle Inspektion durch eine Bedienperson ergibt, dass eine automatisch ermittelte Gefährdung tatsächlich nicht vorliegt.

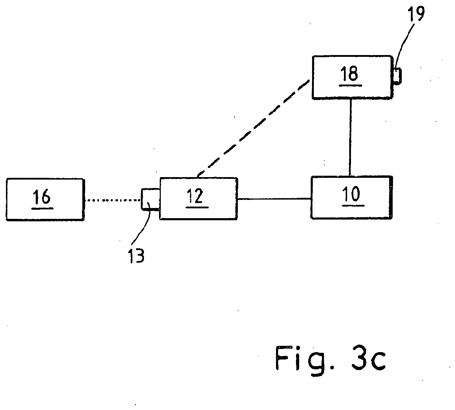

Fig. 3c zeigt schematisch ein Blockdiagramm einer erfindungsgemäßen Ausführungsform des Enteisungssystems. Darin wirkt die Bedienvorrichtung 16 direkt auf die Enteisungssteuervorrichtung 12 der Windenergieanlage 10, ohne dass das Betriebsführungssystem bzw. die Betriebsführungsvorrichtung 18 der Windenergieanlage 10 dazwischengeschaltet ist. Ein solches System ist besonders auch als Nachrüstsystem vorteilhaft. Die gepunktet gezeichnete Verbindung zwischen Bedienvorrichtung 16 und Enteisungssteuervorrichtung 12 ist beispielsweise drahtlos ausgeführt.

Die Enteisungssteuervorrichtung 16 weist, durch eine gestrichelte Linie kenntlich gemacht, optional eine Verbindung mit der Betriebsführungsvorrichtung 18 auf, um beispielsweise Statussignale, wie Feedback, Funktionsfähigkeit nach Selbsttest u. a., zwischen Enteisungssteuerungsvorrichtung 12 und Betriebsführungsvorrichtung 18 auszutauschen. Aus Sicherheitsgründen ist bei dieser Ausführungsform vorteilhafterweise ein Quittierschalter 19 an der Betriebsführungsvorrichtung 18 vorgesehen, der nach dem Abschluss eines Enteisungsvorganges vom Bediener quittiert werden muss, damit die Betriebsführungsvorrichtung 12 wieder in den Automatikbetrieb übergehen kann.

### Bezugszeichenliste

- 1: Enteisungssystem
- 10: Windenergieanlage
- 12: Enteisungssteuervorrichtung
- 13, 13': Signaleingang
- 14: Antenne
- 16: Bedienvorrichtung
- 18: Betriebsführungsvorrichtung
- 19: Quittierschalter
- 20: Gefahrenbereich
- 40: Kamera
- 42: Monitor
- 50: Warnvorrichtung
- 52: Signallampe
- 54: Lautsprecher
- 60: Auswertevorrichtung
- 62: optische Kamera
- 63: Infrarotkamera
- 64: Lichtschranke
- 65: Bewegungssensor
- 66: Windmesser

## Patentansprüche

1. Verfahren zum Enteisen einer Windenergieanlage (10) mit einer Enteisungssteuervorrichtung (12) mittels der ein Enteisungsvorgang ausführbar ist, bei dem an der Windenergieanlage (10) anhaftendes Eis wenigstens teilweise gelöst wird und in einen Gefahrenbereich (20) unterhalb der Windenergieanlage (10) fällt, mit folgenden Verfahrensschritten:
- der Gefahrenbereich (20) wird dahingehend überwacht, ob eine Vetosituation vorliegt, in der sich ein Mensch, ein Tier und/oder ein vor herabfallendem Eis zu schützendes Objekt im Gefahrenbereich (20) befindet;
- der Enteisungsvorgang wird mittels einer Bedienvorrichtung (16) von außerhalb des Gefahrenbereichs (20) gestartet, sofern keine Vetosituation vorliegt; und
- die Überwachung des Gefahrenbereichs (20) wird während des Enteisungsvorgangs fortgesetzt, wobei der Enteisungsvorgang mittels der Bedienvorrichtung (16) unterbrochen wird, sobald eine Vetosituation eintritt oder bevorsteht,
wobei das Überwachen des Gefahrenbereichs (20) und/oder das Starten des Enteisungsvorgangs durch wenigstens eine Bedienperson in Sichtweite des Gefahrenbereichs (20) von einem Standort außerhalb des Gefahrenbereichs (20) erfolgt, von dem aus der Gefahrenbereich direkt überwachbar ist und von dem aus die Bedienvorrichtung (16) bedienbar ist, wobei die Bedienvorrichtung (16) tragbar ausgebildet ist und über Signalkabel und/oder drahtlos, insbesondere mittels sicherer Funkverbindung, mit der Enteisungssteuervorrichtung (12) verbindbar ist oder verbunden ist, oder, dass eine Überwachungsvorrichtung (40; 42; 62-65) vorgesehen ist, mittels der der Gefahrenbereich überwacht wird, wobei das Starten des Enteisungsvorgangs von außerhalb der Sichtweite des Gefahrenbereichs erfolgt, insbesondere von einer Fernüberwachungszentrale aus, wobei während des Enteisungsvorgangs Signale der Überwachungsvorrichtung (40, 32; 62-65), insbesondere Signale einer optischen Kamera (40, 62), einer Infrarotkamera (63), einer Lichtschranke (64) und/oder eines Bewegungssensors (65) der Überwachungsvorrichtung (40, 42; 62-65), automatisch ausgewertet werden und der Enteisungsvorgang automatisch unterbrochen wird, wenn diese Auswertung ergibt, dass eine Vetosituation eingetreten ist oder bevorsteht.

2. Verfahren nach Anspruch 1, **dadurch gekennzeichnet, dass** vor dem Starten des Enteisungsvorgangs ein, insbesondere optisches oder akustisches, Warnsignal erzeugt wird, das im Gefahrenbereich (20) für Menschen wahrnehmbar ist und/oder auf Tiere abschreckend wirkt.

3. Verfahren nach Anspruch 1 oder 2, **dadurch gekennzeichnet, dass** der Enteisungsvorgang unterbrochen wird, wenn eine drahtlose oder kabelgebundene Verbindung zwischen der Bedienvorrichtung (16) und der Enteisungssteuervorrichtung (12) gestört oder unterbrochen ist oder wird.

4. Verfahren nach einem der Ansprüche 1 bis 3, **dadurch gekennzeichnet, dass** die Überwachung des Gefahrenbereichs (20) mittels einer Überwachungsvorrichtung (40, 42; 62-65) ausgeführt wird, wobei insbesondere der Enteisungsvorgang automatisch unterbrochen wird, wenn die Überwachungsvorrichtung (40, 42; 62-65) oder eine Signalübertragung von oder zu der Überwachungsvorrichtung (40, 42; 62-65) gestört ist oder wird.

5. Verfahren nach einem der Ansprüche 1 bis 4, **dadurch gekennzeichnet, dass** der Enteisungsvorgang automatisch unterbrochen wird, wenn ein Parameter der Windverhältnisse, insbesondere eine Windgeschwindigkeit oder eine Windrichtung, oder ein Betriebsparameter der Windenergieanlage (10), insbesondere eine Umlaufgeschwindigkeit eines Rotorblattes (11) der Windenergieanlage (10), außerhalb eines jeweils vorgegebenen Toleranzbereichs liegt.

6. Verfahren nach einem der Ansprüche 1 bis 5, **dadurch gekennzeichnet, dass** nach einem Enteisungsvorgang ein Quittierschalter (19) an einer Betriebsführungsvorrichtung (18) der Windenergieanlage (10) quittiert wird und nach dem Quittieren die Betriebsführungsvorrichtung (18) zu einem automatischen Betrieb der Windenergieanlage (10) überleitet.

7. Verfahren nach einem der Ansprüche 1 bis 6, **dadurch gekennzeichnet, dass** jeweils wenigstens zwei Windenergieanlagen (10) eines Windparks gleichzeitig oder nacheinander, insbesondere unter Verwendung derselben Bedienvorrichtung (16) und/oder derselben Überwachungsvorrichtung (40, 42; 62-65), enteist werden.

8. Enteisungssystem (1) für eine Windenergieanlage (10), umfassend eine Windenergieanlage (10) mit einer Enteisungssteuervorrichtung (12), mittels der ein Enteisungsvorgang ausführbar ist, bei dem an der Windenergieanlage (10) anhaftendes Eis wenigstens teilweise gelöst wird und in einen Gefahrenbereich (20) unterhalb der Windenergieanlage fällt, wobei das Enteisungssystem eine Bedienvorrichtung (16) zur Einleitung und/oder Unterbrechung des Enteisungsvorgangs umfasst, **dadurch gekennzeichnet, dass** die Bedienvorrichtung (16) von einem Standort außerhalb des Gefahrenbereichs (20) aus bedienbar ist, von dem aus der Gefahrenbereich (20) wenigstens teilweise direkt und/oder mittels einer vom Enteisungssystem (1) umfassten Überwachungsvorrichtung (40, 42; 62-65) überwachbar ist oder überwacht wird, insbesondere in Sichtweite des Gefahrenbereichs (20), wobei die Bedienvorrichtung (16) tragbar ausgebildet ist und über Signalkabel und/oder drahtlos, insbesondere mittels sicherer Funkverbindung, mit der Enteisungssteuervorrichtung (12) verbindbar ist oder verbunden ist, oder von einer Fernüberwachungszentrale aus, wobei das System ausgebildet ist, während des Enteisungsvorgangs Signale der Überwachungsvorrichtung (40, 32; 62-65), insbesondere Signale einer optischen Kamera (40, 62), einer Infrarotkamera (63), einer Lichtschranke (64) und/oder eines Bewegungssensors (65) der Überwachungsvorrichtung (40, 42; 62-65), automatisch auszuwerten und den Enteisungsvorgang automatisch zu unterbrechen, wenn diese Auswertung ergibt, dass eine Vetosituation eingetreten ist oder bevorsteht.

9. Enteisungssystem (1) nach Anspruch 8, **dadurch gekennzeichnet, dass** die Überwachungsvorrichtung (40, 42; 62-65) eine optische Kamera (40, 62), eine Infrarotkamera (63), eine Lichtschranke (64) und/oder einen Bewegungssensor (65) umfasst.

10. Enteisungssystem (1) nach Anspruch 8 oder 9, **dadurch gekennzeichnet, dass** das Enteisungssystem (1) eine Warnvorrichtung (50, 52, 54) zur Erzeugung eines, insbesondere akustischen oder optischen, Warnsignals umfasst, das im Gefahrenbereich (20) für Menschen wahrnehmbar ist und/oder auf Tiere abschreckend wirkt.

11. Enteisungssystem (1) nach einem der Ansprüche 8 bis 10, **dadurch gekennzeichnet, dass** die Enteisungssteuervorrichtung (12) oder die Bedienvorrichtung (16) wenigstens einen Signaleingang (13, 13') zum Empfang eines, insbesondere automatisch generierten, Signals aufweist, wobei die Enteisungssteuervorrichtung (12) oder die Bedienvorrichtung (16) dazu ausgebildet ist, den Enteisungsvorgang ausgelöst durch ein am Signaleingang (13, 13') empfangenes Signal automatisch zu unterbrechen, wobei insbesondere eine mit dem Signaleingang (13, 13') verbundene Auswertevorrichtung (60) zur Auswertung eines Signals der Überwachungsvorrichtung (40, 42; 62-65), insbesondere eines Signals einer optischen Kamera (40, 62), einer Infrarotkamera (63), einer Lichtschranke (64) und/oder eines Bewegungssensors (65), vorgesehen ist, wobei mittels der Auswertevorrichtung (60) ein automatisches Signal generierbar und an den Signaleingang (13, 13') der Enteisungssteuervorrichtung (12) oder der Bedienvorrichtung (16) weiterleitbar ist.

12. Enteisungssystem (1) nach einem der Ansprüche 8 bis 11, **dadurch gekennzeichnet, dass** eine Betriebsführungsvorrichtung (18) der Windenergieanlage (10) einen Quittierschalter (19) aufweist, wobei die Betriebsführungsvorrichtung (18) ausgebildet ist, nach einem Enteisungsvorgang erst nach Quittierung am Quittierschalter (19) wieder in einen automatischen Betrieb der Windenergieanlage (10) überzugehen.

## Claims

1. A method of de-icing a wind energy installation (10) with a de-icing control device (12), by means of which a de-icing process may be carried out, in which ice adhering to the wind energy installation (10) is at least partially released and falls into a danger region (20) below the wind energy installation (10), wherein the method comprises the following method steps:
- the danger region (20) is monitored to see if there is a veto situation, in which a person, an animal and / or an object to be protected from falling ice is situated in the danger region (20);
- the de-icing process is started by means of an operating device (16) from outside the danger region (20), if there is no veto situation; and
- the monitoring of the danger region (20) is continued during the de-icing process,
wherein the de-icing process is interrupted by means of the operating device (16) as soon as a veto situation occurs or is imminent,
wherein the monitoring of the danger region (20) and / or the starting of the de-icing process is effected by at least one operator in sighting distance of the danger region (20) from a position outside the danger region (20) from which the danger region can be monitored directly and from which the operating device (16) can be operated, wherein the operating device (16) is constructed so as to be portable and so that it can be connected, or is connected, to the de-icing control device (12) by means of signal cables and / or in a wireless manner, in particular by means of a secure radio connection, or that a monitoring device (40; 42; 62-65) is provided by means of which the danger region is monitored, wherein the starting of the de-icing process is effected from beyond sighting distance of the danger region, in particular from a remote monitoring centre, wherein, during the de-icing process, signals from the monitoring device (40, 32; 62-65), in particular signals from an optical camera (40, 62), an infrared camera (63), a light barrier (64) and / or a motion sensor (65) of the monitoring device (40, 42; 62-65), are automatically evaluated and the de-icing process is automatically interrupted when this evaluation indicates that a veto situation has occurred or is imminent.

2. The method as claimed in Claim 1, **characterised in that**, before the start of the de-icing process, a warning signal, in particular an optical or acoustic warning signal, is produced, which, in the danger region (20), is perceptible to people and / or which acts as a deterrent to animals.

3. The method as claimed in Claim 1 or 2, **characterised in that** the de-icing process is interrupted when a wireless or wired connection between the operating device (16) and the de-icing control device (12) is not working correctly or has been interrupted or is interrupted.

4. The method as claimed in any one of Claims 1 to 3, **characterised in that** the monitoring of the danger region (20) is carried out by means of a monitoring device (40, 42; 62-65), in particular wherein the de-icing process is automatically interrupted if the monitoring device (40, 42; 62-65) or a signal transmission from the monitoring device (40, 42; 62-65) or to the monitoring device (40, 42; 62-65) is not working correctly.

5. The method as claimed in any one of Claims 1 to 4, **characterised in that** the de-icing process is automatically interrupted if a parameter of the wind conditions, in particular a wind speed or a wind direction, or an operating parameter of the wind energy installation (10), in particular a speed of rotation of a rotor blade (11) of the wind energy installation (10), lies outside a respective predetermined range of tolerance.

6. The method as claimed in any one of Claims 1 to 5, **characterised in that**, after a de-icing process, a confirmation switch (19) on an operational control device (18) of the wind energy installation (10) is operated and, after the confirmation, the operational control device (18) switches over to an automatic operation of the wind energy installation (10).

7. The method as claimed in any one of Claims 1 to 6, **characterised in that** at least two wind energy installations (10) of a wind farm are de-iced simultaneously or successively, in particular using the same operating device (16) and / or the same monitoring device (40, 42; 62-65).

8. A de-icing system (1) for a wind energy installation (10) comprising a wind energy installation (10) with a de-icing control device (12), by means of which a de-icing process may be carried out, in which ice adhering to the wind energy installation (10) is at least partially released and falls into a danger region (20) below the wind energy installation, wherein the de-icing system comprises an operating device (16) for initiating and / or interrupting the de-icing process, **characterised in that** the operating device (16) can be operated from a location outside the danger region (20), from which the danger region (20) can be monitored or is monitored at least partially directly and / or by means of a monitoring device (40, 42; 62-65) included in the de-icing system (1), in particular in sighting distance of the danger region (20), wherein the operating device (16) is constructed so as to be portable and so that it can be connected, or is connected, to the de-icing control device (12) by means of signal cables and / or in a wireless manner, in particular by means of a secure radio connection, or **in that** the operating device (16) can be operated by a remote monitoring centre, wherein the system is constructed in such a way that, during the de-icing process, it automatically evaluates signals from the monitoring device (40, 32; 62-65), in particular signals from an optical camera (40, 62), an infrared camera (63), a light barrier (64) and / or a motion sensor (65) of the monitoring device (40, 42; 62-65), and in such a way that it automatically interrupts the de-icing process when this evaluation indicates that a veto situation has occurred or is imminent.

9. The de-icing system (1) as claimed in Claim 8, **characterised in that** the monitoring device (40, 42; 62-65) comprises an optical camera (40, 62), an infrared camera (63), a light barrier (64) and / or a motion sensor (65).

10. The de-icing system (1) as claimed in Claim 8 or 9, **characterised in that** the de-icing system (1) comprises a warning device (50, 52, 54) for producing a warning signal, in particular an acoustic or optical warning signal, which, in the danger region (20), is perceptible to people and / or which acts as a deterrent to animals.

11. The de-icing system (1) as claimed in any one of Claims 8 to 10, **characterised in that** the de-icing control device (12) or the operating device (16) comprises at least one signal input (13, 13') for receiving a signal, in particular an automatically generated signal, wherein the de-icing control device (12) or the operating device (16) is constructed so as to automatically interrupt the de-icing process when triggered by a signal received at the signal input (13, 13'), in particular wherein an evaluation device (60), connected to the signal input (13, 13'), for evaluating a signal from the monitoring device (40, 42; 62-65), in particular a signal from an optical camera (40, 62), an infrared camera (63), a light barrier (64) and / or a motion sensor (65), is provided, wherein an automatic signal may be generated by means of the evaluation device (60) and may be transmitted to the signal input (13, 13') of the de-icing control device (12) or the operating device (16).

12. The de-icing system (1) as claimed in any one of Claims 8 to 11, **characterised in that** an operational control device (18) of the wind energy installation (10) comprises a confirmation switch (19), wherein the operational control device (18) is constructed so as to transition again into an automatic operation of the wind energy installation (10) after a de-icing process only after a confirmation has taken place at the confirmation switch (19).

## Revendications

1. Procédé de dégivrage d'une installation éolienne (10) comprenant un dispositif de commande de dégivrage (12) au moyen duquel un processus de dégivrage peut être exécuté, la glace adhérente à l'installation éolienne (10) étant au moins partiellement dissoute et tombe dans une zone de danger (20) située en dessous de l'installation éolienne (10), le procédé comprenant les étapes suivantes :
- la zone de danger (20) est soumise à une surveillance pour déterminer si une situation de veto existe, situation dans laquelle une personne, un animal, et / ou un objet est à protéger d'une chute de glace dans la zone de danger (20) ;
- le procédé de dégivrage, par l'intermédiaire du dispositif de commande (16) situé à l'extérieur de la zone de danger (20), est mis en oeuvre à condition qu'aucune situation de veto ne se produise ; et
- la surveillance de la zone de danger (20) est maintenue au cours du processus de dégivrage, le processus de dégivrage étant interrompu par l'intermédiaire du dispositif de commande (16) dès qu'une situation de veto se produit ou est imminente,
dans lequel la surveillance de la zone de danger (20) et / ou le démarrage du processus de dégivrage est effectué par au moins un opérateur pouvant voir la zone de danger (20) à partir d'un emplacement situé en dehors de la zone de danger (20), à partir duquel emplacement la zone de danger (20) peut être surveillée directement et à partir duquel emplacement le dispositif de commande (16) est actionnable, dans lequel le dispositif de commande (16) est conçu de manière à être portable et peut être relié ou est relié au dispositif de commande de dégivrage (12) via des câbles de signal et / ou sans fil, en particulier au moyen d'une connexion sans fil sécurisée, ou dans lequel un dispositif de surveillance (40 ; 42 ; 62 à 65) est prévu au moyen duquel la zone de danger est surveillée, dans lequel le démarrage du processus de dégivrage a lieu hors de vue de la zone de danger, en particulier à partir d'un centre de surveillance situé à distance, dans lequel des signaux du dispositif de surveillance (40, 32 ; 62 à 65), en particulier les signaux d'une caméra optique (40, 62), d'une caméra infrarouge (63), d'une barrière photoélectrique (64) et / ou d'un détecteur de mouvement (65) du dispositif de surveillance (40, 42 ; 62 à 65), sont automatiquement évalués pendant le processus de dégivrage, est dans lequel le processus de dégivrage est automatiquement interrompu lorsque cette évaluation montre qu'une situation de veto a eu lieu ou est imminente.

2. Procédé selon la revendication 1, **caractérisé en ce qu'**avant de démarrer le processus de dégivrage, un signal d'avertissement, en particulier un signal d'avertissement visuel ou sonore, est généré de sorte que, dans la zone de danger (20), il soit perçu par les personnes et / ou qu'il agisse comme un moyen de dissuasion pour les animaux.

3. Procédé selon la revendication 1 ou 2, **caractérisé en ce que** le processus de dégivrage est interrompu lorsqu'une connexion sans fil ou une connexion câblée entre le dispositif de commande (16) et le dispositif de commande de dégivrage (12) ne fonctionne pas correctement ou est interrompue.

4. Procédé selon l'une quelconque des revendications 1 à 3, **caractérisé en ce que** la surveillance de la zone de danger (20) est effectuée au moyen d'un dispositif de surveillance (40, 42 ; 62 à 65), dans lequel en particulier le processus de dégivrage est automatiquement interrompu lorsque le dispositif de surveillance (40, 42; 62 à 65) ou une transmission du signal depuis ou vers le dispositif de surveillance (40, 42 ; 62 à 65) ne fonctionne pas correctement.

5. Procédé selon l'une quelconque des revendications 1 à 4, **caractérisé en ce que** le processus de dégivrage est automatiquement interrompu lorsqu'un paramètre de condition du vent, en particulier la vitesse du vent ou la direction du vent, ou qu'un paramètre de fonctionnement de l'installation éolienne (10), en particulier la vitesse de rotation d'une pale de rotor (11) de l'installation éolienne (10), se situe respectivement en dehors d'une plage de tolérance prédéterminée.

6. Procédé selon l'une quelconque des revendications 1 à 5, **caractérisé en ce qu'**après un processus de dégivrage, un commutateur de confirmation d'ordre (19) sur un dispositif de gestion d'opération (18) de l'installation éolienne (10) est actionné, et après la confirmation d'ordre le dispositif de gestion d'opération (18) passe en fonctionnement automatique de l'installation éolienne (10).

7. Procédé selon l'une quelconque des revendications 1 à 6, **caractérisé en ce qu'**au moins deux installations éoliennes (10) d'un parc éolien sont dégivrées simultanément ou successivement, en particulier en utilisant le même dispositif de commande (16) et / ou le même dispositif de surveillance (40, 42; 62 à 65).

8. Système de dégivrage (1) pour une installation éolienne (10), comprenant une installation éolienne (10) ayant un dispositif de commande de dégivrage (12) au moyen duquel un processus de dégivrage peut être exécuté, la glace adhérent à l'installation éolienne (10) étant au moins partiellement dissoute et tombant dans une zone de danger (20) située en dessous de l'installation éolienne, le système de dégivrage comprenant un dispositif de commande (16) pour déclencher et / ou interrompre le processus de dégivrage, **caractérisé en ce que** le dispositif de commande (16) peut être actionné à partir d'un emplacement situé en dehors de la zone de danger (20), emplacement à partir duquel la zone de danger (20), au moins partiellement, peut être surveillée directement et / ou au moyen d'un dispositif de surveillance (40, 42; 62 à 65) inclus dans le système de dégivrage (1) ou est surveillée directement et / ou au moyen d'un dispositif de surveillance (40, 42; 62 à 65) inclus dans le système de dégivrage (1), en particulier à partir d'un emplacement duquel la zone de danger (20) est visible, dans lequel le dispositif de commande (16) est conçu de manière à être portable et peut être relié ou est relié au dispositif de commande de dégivrage (12) via des câbles de signal et / ou sans fil, en particulier au moyen d'une connexion sans fil sécurisée, ou dans lequel le dispositif de commande (16) est actionnable à partir d'un centre de surveillance situé à distance, dans lequel le système est conçu pour évaluer automatiquement des signaux du dispositif de surveillance (40, 32 ; 62 à 65), en particulier les signaux d'une caméra optique (40, 62), d'une caméra infrarouge (63), d'une barrière photoélectrique (64) et / ou d'un détecteur de mouvement (65) du dispositif de surveillance (40, 42 ; 62 à 65), pendant le processus de dégivrage, et pour interrompre automatiquement le processus de dégivrage lorsque cette évaluation montre qu'une situation de veto a eu lieu ou est imminente.

9. Système de dégivrage (1) selon la revendication 8, **caractérisé en ce que** le dispositif de surveillance (40, 42 ; 62 à 65) comprend une caméra optique (40, 62), une caméra infrarouge (63), une barrière photoélectrique (64) et / ou un détecteur de mouvement (65).

10. Système de dégivrage (1) selon la revendication 8 ou 9, **caractérisé en ce que** le système de dégivrage (1) comporte un dispositif d'avertissement (50, 52, 54) pour produire un signal d'avertissement, en particulier un signal d'avertissement sonore ou optique, qui, dans la zone de danger (20), est perceptible par les personnes et / ou qui agit comme un moyen de dissuasion pour les animaux.

11. Système de dégivrage (1) selon l'une quelconque des revendications 8 à 10, **caractérisé en ce que** le dispositif de commande de dégivrage (12) ou le dispositif de commande (16) comprend au moins une entrée de signal (13, 13') pour recevoir un signal, en particulier un signal généré automatiquement, dans lequel le dispositif de commande de dégivrage (12) ou le dispositif de commande (16) est adapté pour que le processus de dégivrage soir interrompu automatiquement lors de la réception d'un signal au niveau de l'entrée de signal (13, 13'), dans lequel en particulier il est prévu qu'un dispositif d'évaluation (60) pour l'évaluation d'un signal du dispositif de surveillance (40, 42 ; 62 à 65), en particulier d'un signal d'une caméra optique (40, 62), d'une caméra infrarouge (63), d'une barrière photoélectrique (64) et / ou d'un détecteur de mouvement (65) soit reliée à l'entrée de signal (13, 13'), dans lequel, au moyen du dispositif d'évaluation (60), un signal automatique peut être généré et peut être transmis à l'entrée de signal (13, 13') du dispositif de commande de dégivrage (12) ou du dispositif de commande (16).

12. Système de dégivrage (1) selon l'une quelconque des revendications 8 à 11, **caractérisé en ce qu'**un dispositif de gestion d'opération (18) de l'installation éolienne (10) comprend un commutateur de confirmation d'ordre (19), dans lequel le dispositif de gestion d'opération (18) est conçu pour ne repasser dans un fonctionnement automatique de l'installation éolienne (10) après une opération de dégivrage qu'après l'acquittement au niveau du commutateur de confirmation d'ordre (19).
